# EUROPEAN PATENT SPECIFICATION

(11) **EP 0 392 722 B1**
(45) Date of publication and mention of the grant of the patent: **15.09.1993**
(21) Application number: 90303543.4
(22) Date of filing: 03.04.1990
(51) Int. Cl.: B60R 1/06, F15B 7/00

(54) **Pneumatic remote control system**
Pneumatische Fernsteuerungseinrichtung
Dispositif pneumatique de commande à distance

(30) Priority: 13.04.1989 GB 8908383
(43) Date of publication of application: 17.10.1990
(73) Proprietor: BRITAX (GECO) S.A., F-77981 Saint Fargeau Ponthierry (FR)
(72) Inventor: Duroux, Bernard, F-78890 Garancières (FR)
(74) Representative: Hollinghurst, Antony

(56) References cited:
- EP-A- 0 282 233
- DE-A- 3 443 745
- US-A- 2 906 098

## Description

This invention relates to a pneumatic remote control system for adjusting the orientation of a controlled member and has particular application to the adjustment of the orientation of a rear view mirror for a vehicle.

A pneumatic remote control system of this type is disclosed in US-A-2928318, in which a controlled member is pivotally mounted for angular movement about an axis and first and second pneumatic actuators are connected to the controlled member for causing angular movement thereof about said axis in respective opposite directions, each actuator being connected by to control means for controlling the gas pressure in the actuators.

The control system disclosed in the above mentioned US patent specification requires a supply of gas at a pressure differing from atmospheric pressure, the particular system disclosed using the reduced pressure existing at the inlet manifold of an internal combustion engine. One aim of the present invention is to provide a system of this type which does not require an external pressure source.

It is also known, e.g. from EP-A-0282233 to provide a hydraulic system in which each actuator is connected to a corresponding master actuator by a sealed hydraulic circuit. Another aim of the present invention is to provide a pneumatic system in which the fluid used to drive the actuators can readily be replenished from the atmosphere.

According to the invention, in a pneumatic remote control system of the type described above, each pneumatic actuator has an exhaust port closed by a respective exhaust valve and control means responsive to differences in air pressure in the actuators is arranged to close the exhaust valve of the actuator at the higher pressure and to open the exhaust valve of the other actuator.

In a preferred form of the invention, a separate manually operable pump is connected to each actuator. Each pump may take the form of a flexible bulb having an inlet port connected to atmosphere and arranged to be closed by a non-return valve, and an outlet port connected to the corresponding actuator.

An embodiment of the invention will now be described, by way of example, with reference to the accompanying drawings, in which:
Figure 1 is a schematic diagram of a pneumatic remote control system suitable for controlling the orientation of a vehicle rear view mirror;
Figure 2 is a cross-sectional view of a pump suitable for use with the pneumatic actuators of the control system illustrated in Figure 1;
Figure 3 is a cross-sectional view of a remote control system of the type illustrated in Figure 1, taken on the line 3 - 3 in Figure 4; and
Figure 4 is a cross-sectional view taken on the line 4 - 4 in Figure 3.

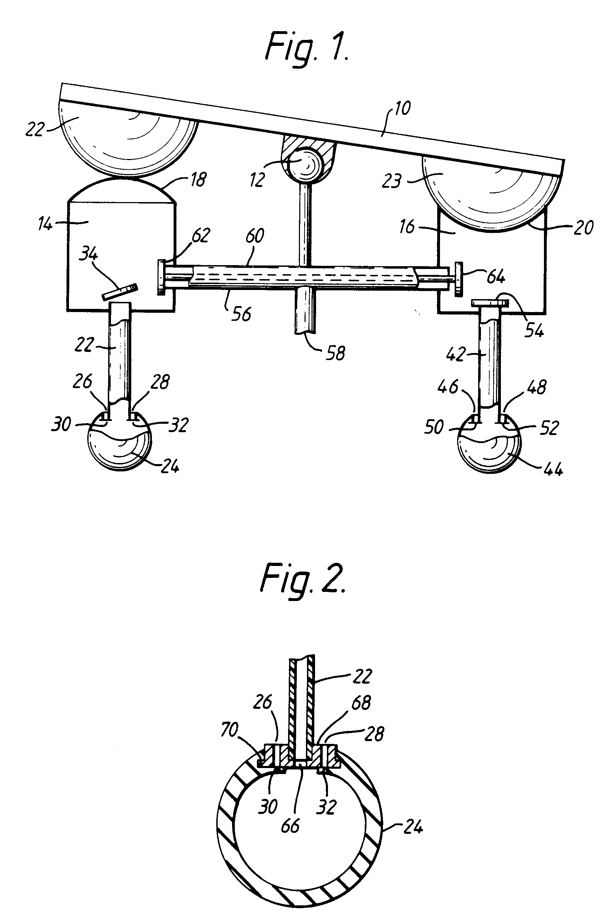

Referring to Figure 1, a mirror carrier 10 for the reflective member (not shown) of a vehicle rear view mirror is mounted on a universal pivot 12. Respective pneumatic actuator chambers 14 and 16 are mounted on opposite sides of the pivot 12. The chambers 14 and 16 have one end closed by respective flexible membranes 18 and 20 which abut against respective hemispherical formations 22 and 23 on the back surface of the mirror carrier 10. The actuator chambers 14 and 16 are so positioned in relation to the pivot joint 12 that, when the membrane 18 is in its fully convex state, as illustrated, the other membrane 20 is in its fully concave state. The actuator 14 is connected by a tube 22 to a flexible bulb 24. Surrounding the tube 22, the bulb 24 has inlet ports 26 and 28 which are closed by respective non-return flap valves 30 and 32. The end of the tube 22 connected to the actuator chamber 14 is also covered by a non-return flap valve 34. Similarly the actuator 16 has an inlet tube 42 connected to a flexible bulb 44 with inlet ports 46 and 48 covered by non-return flap valves 50 and 52.

The two actuator chambers 14 and 16 are interconnected by a tube 56 which has an exhaust port 58 at an intermediate point along its length. The tube 56 contains a rod 60 which carries a respective valve element 62, 64 on each end. The length of the rod 60 is such that when the valve element 62 in the actuator chamber 14 abuts against the end of the tube 56, sealing the chamber 14 from the exhaust port 58, the other valve element 64 in the actuator chamber 16 is clear of the corresponding end of the tube 56 so that the chamber 16 is coupled to the exhaust port 58.

In use, if the bulb 24 is squeezed manually, the increased air pressure therein closes the flap valves 30 and 32 and opens the flap valve 34 so that air is displaced into the actuator chamber 14. The resulting increase in air pressure in the actuator chamber 14 causes the exhaust valve 62 to close with the result that the rod 60 opens the exhaust valve 64 in the other actuator chamber 16 which is therefore vented to atmosphere via the outlet 58. If the bulb 24 is then relaxed, the flap valve 34 closes and the flap valve 30 and 32 open, allowing more air to be drawn into the bulb 24. The extension of the membrane 18 resulting from the increase in air pressure in the chamber 14 displaces the projection 22 and thus tilts the mirror carrier 10 as illustrated. If the bulb 44 is squeezed, air is displaced into the other actuator chambers 16 and the mirror carrier 10 tilts in the opposite direction.

Figure 2 illustrates the construction of the bulb 24 and its connection to the tube 22 in more detail. The end of the tube 22 engages in a central bore 66 in a disk 68, the inlet ports 26 and 28 comprising bores extending through the disk 68 parallel to the central bore 66. The bulb 24 has an opening which is in airtight engagement with a shoulder 70 on the periphery of the disk 68. The flaps forming the valve 30 and 32 are formed integrally with the bulb 24 and project therefrom so as to cover the inner ends of the bores 26 and 28.

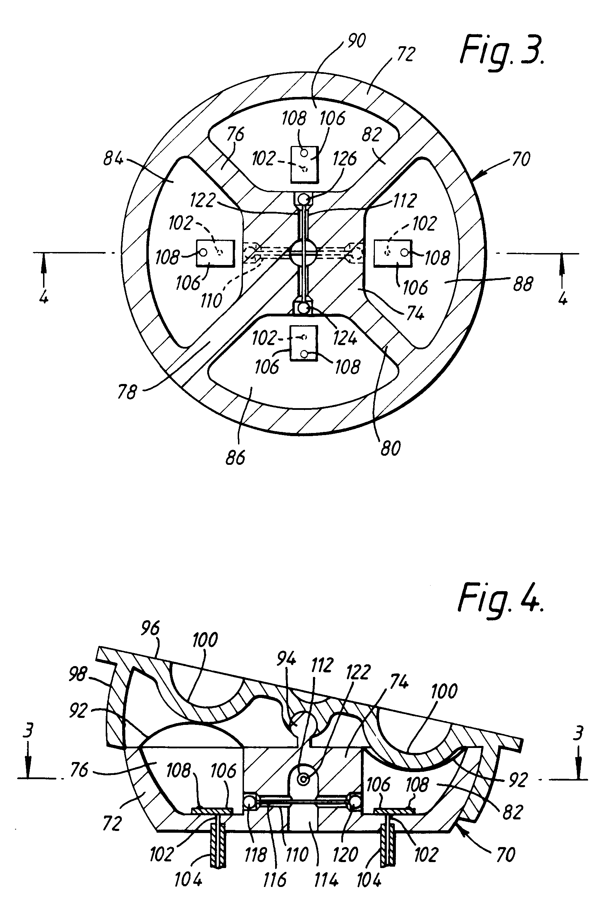

Figure 3 and 4 illustate the application of the invention to a rear view mirror for a motor vehicle of the type in which a reflective member is mounted in a housing in such a manner that the orientation of the reflective member relative to the housing is adjustable. In Figures 3 and 4, a base member 70 is secured to the interior of the mirror housing (not shown). The base member 70 is generally cup-like having a peripheral flange 72 with a part-spherical outer surface. A central rectangular boss 74 is connected to the flange 72 by four uniformly spaced spokes 76, 78, 80 and 82 so as to form four pneumatic chambers 84, 86, 88 and 90, each of which is covered by a respective flexible membrane 92 (Figure 4) which extends between the flange 72, the central boss 74 and the respective spokes bounding such chamber.

The central boss 74 carries a spherical projection 94 located at the centre of curvature of the outer surface of the flange 72. The projection 94 engages in a spherical socket in the centre of a mirror carrier 96 to form a universal pivot joint. The mirror carrier 96 has a peripheral flange 98 with a concave inner surface which engages with the convex outer surface of the flange 72 on the base member 70. The flange 98 has a series of slots (not shown) extending inwardly from its outer edge so as to permit it to be snapped over the flange 72 during assembly (and also to reduce the friction resisting movement of the mirror carrier 96 relative to the flange 72). The mirror carrier 96 also has four convex projections 100, each of which is aligned with a respective one of the four chambers 84, 86, 88 and 90 in the base member 70 so that the corresponding flexible membrane 92 can engage therewith.

Each of the chambers 84, 86, 88 and 90 has a respective inlet port 102 which is connected to a corresponding flexible tube 104 and is covered by a respective flap valve 106 secured by a rivet 108. These operate in a similar manner to the valves 34 and 54 of Figure 1, the tube 104 being connected to respective bulbs 24 as illustrated in Figure 2.

One pair of diametrically opposite chambers 82 and 88 has an interconnecting bore 110 and the other pair of chambers 86 and 90 has a similar interconnecting bore 112. Both the bores 110 and 112 are in communication at their mid-points with an exhaust port 114. The bore 110 contains a rod 116 with respective valve elements 118 and 120 on each end arranged to block the corresponding ends of the bore 110. The bore 112 contains a similar rod 122 with valve elements 124 and 126 on its ends. Thus, each of the pairs of chambers 84, 88 and 86, 90 is equipped with similar valves and ports to the pair of chambers 14 and 16 illustrated in Figure 1 and thus operates to adjust the orientation of the mirror carrier 96 about respective orthogonal axes.

Since the pneumatic circuits are not sealed, performance is not affected by temperature changes. In addition, if one depression of either bulb 24, 44 produces insufficient movement, the effect of a succession of such depressions is cumulative.

## Claims

1. A pneumatic remote control system comprising a controlled member (10; 96) pivotally mounted for angular movement about an axis and first and second pneumatic actuators (14, 16; 84, 88; 86, 90) connected to the controlled member (10) for causing angular movement thereof about said axis in respective opposite directions, each actuator (14, 16; 84, 88; 86, 90) being connected by a respective tube through control means for controlling the gas pressure in the actuators, characterised in that each pneumatic actuator (14, 16; 84, 88; 86, 90) has an exhaust port closed by a respective exhaust valve (62, 64; 118, 120; 124, 126) and control means (60; 116; 122) responsive to differences in air pressure in the actuators (14, 16; 84, 86, 88, 90) is arranged to close the exhaust valve (62, 64; 118, 120; 124, 126) of the actuator (14, 16; 84, 88; 86, 90) at the higher pressure and to open the exhaust valve (64, 62; 120, 118; 126, 124) of the other actuator (16, 14; 88, 84; 90, 86).

2. A system according to claim 1, wherein a separate manually operable pump (24, 44) is connected to each actuator (14, 16; 84, 86, 88, 90).

3. A system according to claim 2, wherein each pump comprises a flexible bulb (24, 44) having an inlet port (26, 28; 46, 48) connected to atmosphere and arranged to be closed by a non-return valve (30, 32; 50, 52), and an outlet port (22, 42) connected to the corresponding actuator (14, 16; 84, 86, 88, 90).

4. A system according to claim 1, 2 or 3, wherein the control means responsive to differences in air pressure in the actuators (14, 16; 84, 86, 88, 90) comprises a thrust member (60; 116; 122) coupling the exhaust valve (62; 118; 124) of one actuator (14; 84; 86 ) to the exhaust valve (64; 120; 126) of the other actuator (16; 88; 90).

5. A system according to claim 4, wherein the thrust member (60; 116; 122) is accommodated in a duct (56; 110; 112) interconnecting the exhaust ports of the pneumatic actuators (14, 16; 84, 88; 86, 90), the duct (56; 110; 112) having a common exhaust outlet (58; 114).

6. A system according to claim 5, having two pairs of actuators (84, 88;86, 90) aranged to control the orientation of the control member about two mutually orthogonal axes, the ducts (110; 112) of both pairs of actuators being connected to a common exhaust outlet (114).

7. A system according to any preceding claim, wherein the controlled member is a mirror carrier (10; 96) for the relective member of a vehicle rear-view mirror.

## Patentansprüche

1. Pneumatisches Fernbedienungssystem, umfassend ein gesteuertes Element (10; 96), das zur Durchführung einer Winkelbewegung um eine Achse schwenkbar montiert ist, sowie erste und zweite pneumatische Betätigungsvorrichtungen (14, 16; 84, 88; 86, 90), die mit dem gesteuerten Element (10) verbunden sind, um dessen Winkelbewegung um die genannte Achse in jeweils entgegengesetzte Richtungen zu bewirken, wobei jede Betätigungsvorrichtung (14, 16; 84, 88; 86, 90) jeweils durch einen Schlauch über eine Regelvorrichtung zur Regelung des Gasdruckes in den Betätigungsvorrichtungen verbunden ist, dadurch gekennzeichnet, daß jede pneumatische Betätigungsvorrichtung (14, 16; 84, 88; 86, 90) über eine Auslaßöffnung verfügt, die jeweils von einem Auslaßventil (62, 64; 118, 120; 124, 126) geschlossen wird, und daß eine Regelvorrichtung (60; 116; 122), die auf Luftdruckunterschiede in den Betätigungsvorrichtungen (14, 16; 84, 86; 88, 90) anspricht, angeordnet ist, um das Auslaßventil (62, 64; 118, 120; 124, 126) der Betätigungsvorrichtung (14, 16; 84, 88; 86, 90) bei dem höheren Druck zu schließen und das Auslaßventil (64, 62; 120, 118; 126, 124) der anderen Betätigungsvorrichtung (16, 14; 88, 84; 90, 86) zu öffnen.

2. System nach Anspruch 1, wobei eine separate, manuell bedienbare Pumpe (24, 44) mit jeder Betätigungsvorrichtung (14, 16; 84, 86, 88, 90) verbunden ist.

3. System nach Anspruch 2, wobei jede Pumpe einen flexiblen Ball (24, 44) umfaßt, der eine Eintrittsöffnung (26, 28; 46, 48), die mit der Atmosphäre in Verbindung steht und so angeordnet ist, daß sie von einem Rückschlagventil (30, 32; 50, 52) geschlossen wird, sowie eine Austrittsöffnung (22, 42) besitzt, die mit der entsprechenden Betätigungsvorrichtung (14, 16; 84, 86, 88, 90) verbunden ist.

4. System nach Anspruch 1, 2 oder 3, wobei die Regelvorrichtung, die auf Luftdruckunterschiede in den Betätigungsvorrichtungen (14, 16; 84, 86, 88, 90) anspricht, ein Druckelement (60; 116; 122) umfaßt, das das Auslaßventil (62; 118; 124) der einen Betätigungsvorrichtung (14; 84; 86) mit dem Auslaßventil (64; 120; 126) der anderen Betätigungsvorrichtung (16; 88; 90) verbindet.

5. System nach Anspruch 4, wobei das Druckelement (60; 116; 122) in einem Kanal (56; 110; 112) untergebracht ist, der die Auslaßöffnungen der pneumatischen Betätigungsvorrichtungen (14, 16; 84, 88; 86, 90) miteinander verbindet, wobei der Kanal (56; 110; 112) einen gemeinsamen Gasauslaß (58; 114) besitzt.

6. System nach Anspruch 5, wobei das System zwei Paar Betätigungsvorrichtungen (84, 88; 86, 90) umfaßt, die vorgesehen sind, um die Ausrichtung des Regelelementes um zwei senkrecht zueinander angeordnete Achsen zu regeln, wobei die Kanäle (110; 112) der beiden Betätigungsvorrichtungspaare mit einem gemeinsamen Gasauslaß (114) verbunden sind.

7. System nach einem der vorstehenden Ansprüche, wobei es sich bei dem gesteuerten Element um einen Spiegelträger (10; 96) für das Rückstrahlelement eines Fahrzeugrückspiegels handelt.

## Revendications

1. Un système pneumatique de commande à distance comprenant un élément commandé ou asservi (10; 96) monté à pivotement pour effectuer un déplacement angulaire autour d'un axe et des premier et deuxième dispositifs d'actionnement pneumatiques (14, 16; 84, 88; 86,90) reliés à l'élément commandé (10) pour provoquer son déplacement angulaire autour dudit axe dans des directions respectives opposées, chaque dispositif d'actionnement (14, 16; 84, 88; 86,90) étant relié à un tube respectif, par l'intermédiaire de moyens de commande, pour régler la pression du gaz dans les dispositifs d'actionnement, caractérisé en ce que chaque dispositif d'actionnement pneumatique (14, 16; 84, 88; 86,90) comprend un orifice d'échappement fermé par une soupape d'échappement respective (62, 64; 118, 120; 124, 126) et des moyens de commande (60; 116; 122) sensibles à des différences de pression de l'air dans les dispositifs d'actionnement (14, 16; 84, 88; 86,90), agencé pour fermer la soupape d'échappement (62, 64; 118, 120; 124, 126) du dispositif d'actionnement (14, 16; 84, 88; 86,90) lorsque la pression s'élève et à ouvrir la soupape d'échappement (64, 62; 118; 126, 124) de l'autre dispositif d'actionnement (16, 14; 88, 84; 90, 86).

2. Un système selon la revendication 1, dans lequel une pompe à main indépendante (24, 44) est reliée à chaque dispositif d'actionnement (14, 16; 84, 88; 86,90).

3. Un système selon la revendication 2, dans lequel chaque pompe comprend une poire souple (24, 44) munie d'un orifice d'entrée (26, 28; 46, 48) communiquant avec l'atmosphère et agencé pour être fermé par un clapet anti-retour (30, 32; 50, 52) et un orifice de sortie (22, 42) relié au dispositif d'actionnement correspondant (14, 16; 84, 88; 86,90).

4. Un système selon la revendication 1, 2 ou 3, dans lequel les moyens de commande sensibles à des différences de pression de l'air des dispositifs d'actionnement (14, 16; 84, 88; 86,90) comprennent un élément de poussée (60; 116; 122) reliant la soupape d'échappement (62; 118; 124) d'un dispositif d'actionnement (14; 84; 86) à la soupape d'échappement (64; 120; 126) de l'autre dispositif d'actionnement (16; 88; 90).

5. Un système selon la revendication 4, dans lequel l'élément de poussée (60; 116; 122) est logé dans un conduit (56; 110; 112) reliant les orifices d'échappement des dispositifs d'actionnement pneumatiques (14, 16; 84, 88; 86,90), le conduit (56; 110; 112) comportant un orifice d'échappement commun (58; 114).

6. Un système selon la revendication 5, comprenant deux paires de dispositifs d'actionnement (84, 88; 86,90) agencés pour commander l'orientation de l'élément de commande autour de deux axes mutuellement orthogonaux, les conduits (110; 112) des deux paires de dispositifs d'actionnement étant reliées à une sortie d'échappement commune (114).

7. Un système selon l'une quelconque des précédentes revendications, dans lequel l'élément commandé est un support de miroir (10; 96) de l'élément réflecteur d'un rétroviseur de véhicule.
